(19) Europäisches Patentamt
European Patent Office
Office européen des brevets

(11) **EP 0 802 074 B1**

## (12) EUROPEAN PATENT SPECIFICATION

(45) Date of publication and mention
of the grant of the patent:
**20.08.2003 Bulletin 2003/34**

(51) Int Cl.⁷: **B60C 23/06**

(21) Application number: **97302472.2**

(22) Date of filing: **11.04.1997**

(54) **Method for detecting decrease of tyre air pressure and apparatus used therefor**

Gerät und Verfahren zum Detektieren eines Druckabfalls im Reifen

Appareil et procédé concernant la détection d'une baisse de pression dans un pneumatique

(84) Designated Contracting States:
**DE FR GB IT SE**

(30) Priority: **15.04.1996 JP 9231196**

(43) Date of publication of application:
**22.10.1997 Bulletin 1997/43**

(73) Proprietors:
• **SUMITOMO ELECTRIC INDUSTRIES, LTD**
  **Osaka-shi, Osaka-fu 541 (JP)**
• **SUMITOMO RUBBER INDUSTRIES LIMITED**
  **Kobe-shi, Hyogo-ken (JP)**

(72) Inventor: **Oshiro, Yuji**
**Akashi-shi, Hyogo-ken (JP)**

(74) Representative: **Stewart, Charles Geoffrey**
**Dunlop Tyres Ltd**
**Fort Dunlop, Erdington,**
**Birmingham B24 9QT (GB)**

(56) References cited:
**EP-A- 0 291 217**      **EP-A- 0 441 600**
**EP-A- 0 652 121**      **EP-A- 0 656 268**
**EP-A- 0 786 362**

## Description

The present invention relates to methods for detecting decrease of tyre air pressure and an apparatus used therefor. More particularly, the invention relates to a method for detecting decrease of tyre air pressure regardless of vehicle speed is running at a low velocity or at a high velocity and an apparatus used therefor.

In recent years, as one of the safety devices for 4-wheel vehicles such as passenger cars and trucks, there have been proposed devices for detecting decrease of tyre air pressure, some of which have already been in practical application.

The devices for detecting decrease of tyre air pressure are those developed under recognition of the important thereof mainly for the following reasons. Namely, when the air pressure decreases, the temperature of the tyre increases due to increase of deflection. When the temperature increases, the strength of polymer materials used for the tyre decreases, leading to bursting of the tyre. Normally, this occurs for an inflation pressure loss of about 0.5 atmosphere, of which frequently a driver would be unaware. For this reason, an apparatus capable of detecting such loss of air pressure has been desired.

The method of detecting decrease of air pressure in the above-mentioned tyre air pressure detecting device includes, for example, one based on the difference of the angular velocity of rotation F1, F2, F3 and F4, hereinafter generally referred to as angular velocity of rotation Fi, of four tyres W1, W2, W3 and W4 provided on the vehicle wherein tyres W1 and W2 correspond to the front left and right tyres, and tyres W3 and W4 correspond to the rear left and right tyres, respectively; hereinafter, generally referred to as tyre Wi.

According to the method, for example, based on signals outputted from the wheel velocity sensor fitted to the tyre Wi, the angular velocity of rotation Fi of the tyre Wi is detected on each predetermined sampling period. Here, the detected angular velocity of rotation Fi is all the same, provided that the effective rolling radii of tyre Wi which is the amount obtained by dividing the distance of vehicle advance by $2\pi$ when the tyre rotated by one turn during free rotation of tyre are all the same, and the vehicle runs linearly.

On the other hand, the effective rolling radii of tyre Wi vary to meet, for example, the variation of air pressure of the tyre Wi. Namely, when the air pressure of the tyre Wi decreases, the effective rolling radius becomes smaller than in the case of normal inner pressure. Accordingly, the angular velocity of rotation Fi of the tyre Wi in which its air pressure is lowered become faster than in the case of normal inner pressure. Therefore, the decrease of air pressure of the tyre Wi can be detected by the difference of each angular velocity of rotation Fi.

The judgement equation for detecting decrease of air pressure of the tyre Wi by the difference of angular velocity of rotation Fi is, for example, one as shown in the following equation (1) as disclosed by, Japanese Unexamined Patent Publications No JP 63-305011A/1988 and No JP4-212609A/1992 (corresponding methods and apparatae are disclosed in closest pre-published prior art document EP 0 652 121 A1 and in EP 0 786 362 A3, published after the filing date of the present patent application, but having an earlier priority date (state of the art according to Article 54(3) and (4) EPC)

$$(F_1+F_4-F_2-F_3)/\{(F_1+F_2+F_3+F_4)/2\} \qquad (1)$$

Assuming that the effective rolling radii of the above tyre Wi are all the same, the angular velocity of rotation Fi becomes all the same ($F_1 = F_2 = F_3 = F_4$), so that the judgement value D is 0. Therefore, when the threshold values $D_{TH1}$ and $D_{TH2}$ are set and the following equation (2) is satisfied, it is judged that there is a tyre Wi in which the air pressure is lowered, and when the equation (2) is not satisfied, it is judged that there is no tyre Wi whose air pressure is lowered. Further, when it is judged that there is a tyre Wi whose air pressure is lowered, an alarm is issued by, for example, a display device.

$$D < -D_{TH1} \text{ or } D > D_{TH2} \qquad (2)$$

However, with only the judgement of the air pressure decrease based on the above equations (1) and 2), there is a drawback of the possibility of erroneous detection, depending on the vehicle running condition. For example, when the air pressure of any one tyre Wi of the tyres Wi shows decrease, accurate detection can be made whether the air pressure is lowered or not if the vehicle is running at a relatively low velocity, while if the vehicle is running at a relatively high velocity, there is a possibility of making an erroneous detection. The reason is because the slip rate of the depressurised wheel during the high velocity running is reduced, and the rolling radius is increased by the centrifugal force acting on the tyre.

One proposal in European publication EP-0 652 121-A proposes limiting the influences of speed variations or forward/backward acceleration by correcting the angular speeds of the tyres by correction coefficients which are obtained in a test and stored for subsequent use. A single correction is therefore made based on the ratio between driven and non-driven wheels and the correction remains fixed until retesting/calibration is carried out. Another proposal in European publication EP-0 786 362-A senses the deceleration of the vehicle based on detected front and rear acceleration and when the inflation pressure based on the rotational angular velocities.

In view of the above circumstances described above, an object of the present invention is to provide a method for detecting decrease of tyre air pressure and an apparatus used therefor capable of detecting accurately decrease of tyre air pressure regardless of the vehicle running condition, thereby preventing erroneous issuance or non-issuance of alarm, that is, notwithstanding the pressure decrease, no alarm is issued.

A further object of the present invention is to provide a method for detecting decrease of tyre air pressure and an apparatus used therefor capable of detecting accurately decrease of tyre air pressure regardless of the vehicle running condition, especially regardless of the vehicle running velocity, thereby -preventing erroneous issuance or non-issuance of alarm.

Accordingly the object of the invention is achieved by the subject-matter of claims 13 or 5. The further advantageous embodiments are found in the dependent claims.

Embodiments of the present invention will now be described in detail in conjunction with the accompanying drawings.

Figure 1 is a block diagram to show an embodiment of an apparatus for detecting decrease of tyre air pressure according to the present invention;
Figure 2 is a block diagram to show an electrical structure of the apparatus for detecting decrease of tyre air pressure in Figure 1;
Figure 3 is a flow chart for illustrating alarm generation/stoppage process in the apparatus for detecting decrease of tyre air pressure in Figure 1;
Figures 4 and 5 are flow charts for illustrating the velocity regression pressure decreased judgement of the alarm generation/stoppage process in the apparatus for detecting decrease of tyre air pressure in Figure 1;
Figure 6 is an illustrative view to show that, during a high velocity running of the vehicle, the front and rear accelerations are in positive range, and the judgement value decreases in secondary function manner according to increase of velocity;

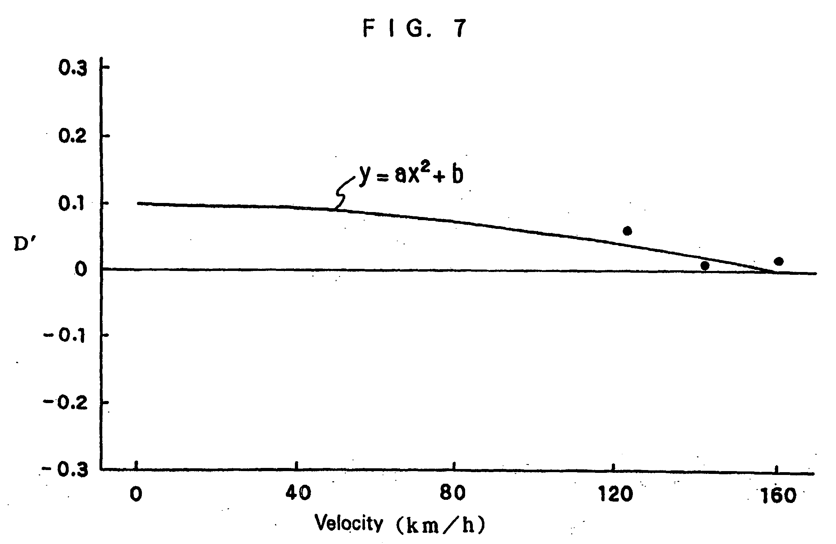

Figure 7 is a view illustrating the least squares method;
Figure 8 is a flow chart for illustrating another embodiment of the apparatus for detecting decrease of tyre air pressure according to the present invention;
Figure 9 and 10 are flow charts for illustrating the velocity regression pressure decrease judgement in Figure 8;
Figure 11 is an illustrative view of erroneous judgement; and
Figure 12 is a view for illustrating the least squares method relating to another embodiment.

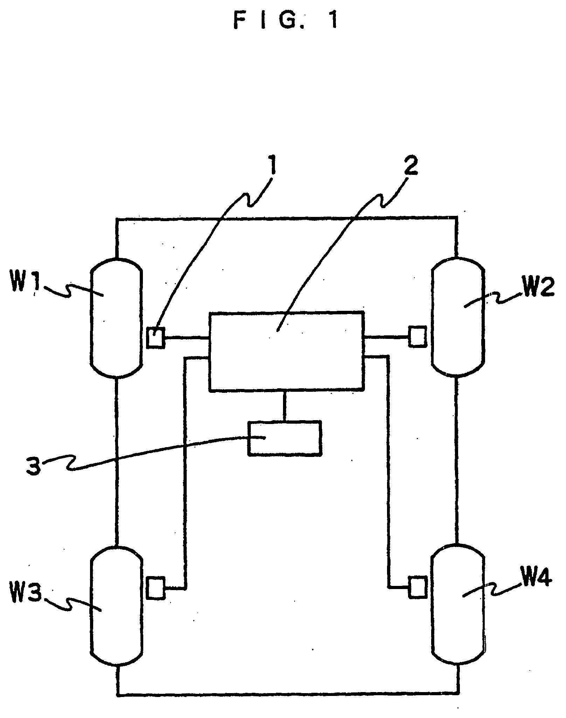

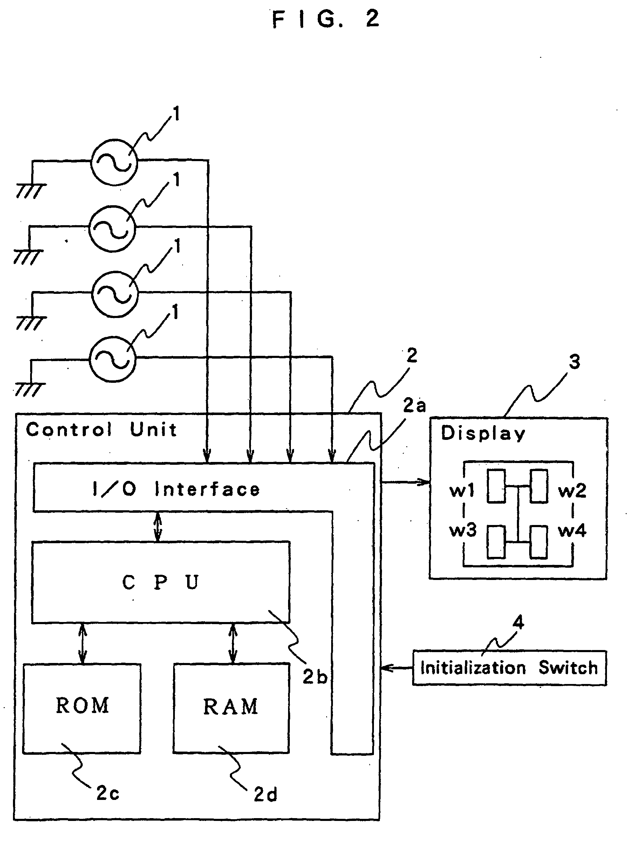

As shown in Figures 1 and 2, the apparatus for detecting decrease of tyre air pressure of the present invention detects whether the air pressures of the four tyres W1, W2, W3 and W4 provided on a four-wheel vehicle have decreased or not, and is furnished with ordinary wheel velocity sensors 1 provided in connection with the tyres W1, W2, W3 and W4, respectively. The output of the wheel velocity sensors 1 is given to the control unit 2. To the control unit 2 there is connected a display 3 which is constituted by a liquid crystal display device, a plasma display device or CRT for notifying the tyre Wi whose air pressure has decreased. Also, since tyres Wi have manufacturing variations, it is necessary to make correction so as to make the dynamic load radii of Wi identical when running at normal inner pressure. For this purpose, 4 is a switch to provide an initialisation step for the above correction.

The control unit 2 includes, as shown in Figure 2, an I/O interface 2a which is necessary for receipt and delivery of signals with the external apparatuses, CPU 2 which functions as a nucleus of operation processing, ROM 2c storecontrol operation programs for the CPU 2b, and RAM 2d is memory to which the data are temporarily written or read out from for the purpose of the control operation of the CPU 2b.

In the above vehicle velocity sensor 1, a pulse signal corresponding to the number of revolutions of the tire Wi, hereinafter referred to as a wheel velocity pulse, is outputted. In CPU 2b, based on the wheel velocity pulse outputted from the wheel velocity sensor 1, an angular velocity of rotation Fi for each tyre Wi is computed at each predetermined sampling period $\blacktriangle T$ (sec), e.g., $\blacktriangle T = 1$ sec.

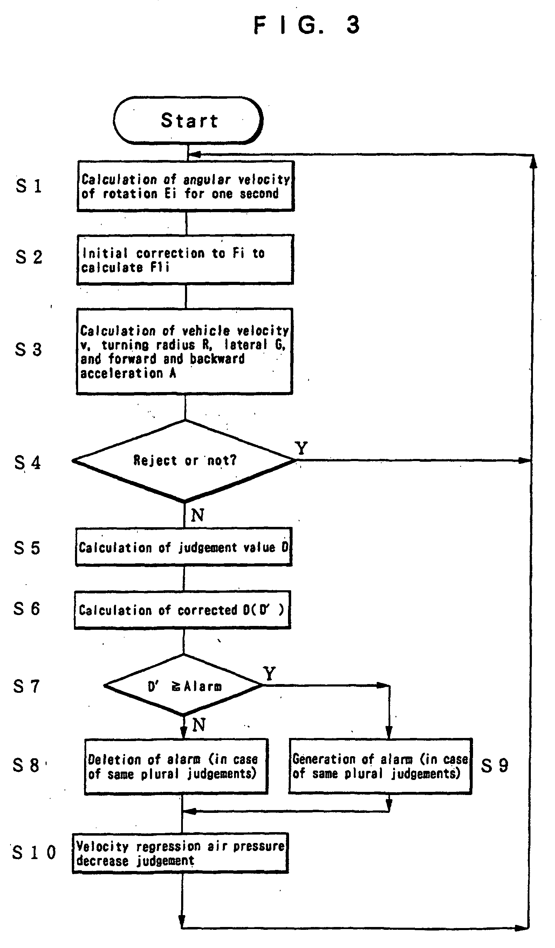

Next, explanation is given of the processing in the method of detecting decrease of tyre air pressure of the present invention. This process is realised by software. First, as shown in Figure 3, based on the wheel velocity pulse outputted from the wheel velocity sensor 1 for each one second, the angular velocity of rotation Fi of each tyre Wi is computed (Step S1). however, since each tyre Wi is manufactured with including dispersion within the standard (initial difference), the effective rolling radius of the tyres Wi are not necessarily identical to one another even with all at normal inner pressure. For this reason, the angular velocity of rotation Fi of each tyre Wi is different.

Therefore, a corrected angular velocity of rotation F1i for cancelling the variation is computed (Step S2). Specifically , the correction is made according to the equations shown below:

$$F1_1 = F_1$$

$$F1_2 = mF_2$$

$$F1_3 = F_3$$

$$F1_4 = nF_4$$

The correction coefficients $\underline{m}$ and $\underline{n}$ are obtained by, for example, calculating the angular velocity of rotation Fi in the condition where the vehicle is runlinearly is straight, and calculating as m=F1/F2, n=F3/F4 based on the calculated angular velocity of rotation Fi.

Then based on the above F1i, vehicle velocity V, turning radius R, lateral G, and forward and backward acceleration A are computed (Step S3).

By the way, with respect to the above angular velocity of rotation Fi, depending on the size of the vehicle turning radius R, vehicle velocity V, vehicle lateral direction acceleration G, and forward and backward acceleration hereinafter referred to simply as forward and backward acceleration A, the dispersion become large, and as a result there is a likelihood of misjudgement.

That is to say, when the turning radius R is relatively small, there is a likelihood that the tyre Wi will slip sideways, so that there is a high possibility that the dispersion of the computed angular velocity of rotation Fi will become large. When the vehicle velocity V is extremely slow, the detection precision of the vehicle velocity sensor 1 is remarkably lowered, so that there is a high possibility that the dispersion of the computed angular velocity of rotation Fi will become large. In the case where the lateral G of vehicle is relatively large, there is a possibility that the tyre Wi will slip sideways, so that there is a high possibility for the dispersion of the computed angular velocity of rotation Fi will become large. Further, in the case where the absolute value of the vehicle forward and backward acceleration A relatively large, there can be the effects of the slip of tyre Wi caused by the abrupt acceleration or abrupt deceleration of vehicle or of the foot brake, so that there is a high possibility that the dispersion of the computed angular velocities of rotation Fi will become large. As reviewed above, when there is a high possibility for the errors to be included in the angular velocity of rotation Fi, it is desirable for the angular velocity of rotation Fi not to be adopted for detecting air pressure decrease but instead to be rejected.

Accordingly, based on the size of the vehicle turning radius R, vehicle velocity V, vehicle lateral direction acceleration G, and forward and backward acceleration A, identification is made as to whether the angular velocity of rotation F1i obtained in the step S2 is rejected or not (Step S4).

Following Step S4, when the angular velocity of rotation F1i is not rejected, the judgement value D is computed by the following equation (3) based on the angular velocity of rotation F1i (Step S5).

$$D = (F_1+F_4-F_2-F_3)/\{(F_1+F_2+F_3+F_4)/2\} \qquad (3)$$

By the way, the computation of the vehicle turning radius R, vehicle velocity V, vehicle lateral direction acceleration G, and forward and backward acceleration A in the above Step S5 is carried out by using the angular velocity of rotation F1i to which the correction of the initial difference is made. On the other hand, the effective rolling radius of. the tyre Wi fluctuates by not only the initial difference but also the vehicle turning radius R, vehicle velocity V, vehicle lateral direction acceleration G, and forward and backward acceleration A. Accordingly, to the judgement value D obtained in the step S5, there are acted the effects of the fluctuation factors including the vehicle turning radius R, vehicle velocity V, vehicle lateral direction acceleration G, and forward and backward acceleration A.

In view of the above, there is carried out a correction for rejecting the effects of the fluctuation factors of the judgement value D such as vehicle turning radius R, vehicle velocity V, vehicle lateral direction acceleration G, and forward and backward acceleration in (Step S6).

Specifically, correction is made by the following equation (4).

$$D'=D-\alpha 1 \times \text{lateral G}-\alpha 2 \times \text{lateral G} \times A \qquad (4)$$

D' obtained in the Step S6 is temporarily stored in, for example RAM 2d.

Here, in the above equation (4), $\alpha 1$ and $\alpha 2$ are coefficients. These coefficients $\alpha 1$ and $\alpha 2$ are those previously obtainable by a procedure in which the vehicle running test is carried out when it is known certainly that each tyre Wi is normal, and based on the vehicle turning radius R, vehicle velocity V, vehicle lateral direction acceleration G, and forward and backward acceleration A calculated at that time. The coefficients $\alpha 1$ and $\alpha 2$ are previously memorised in, for example, the ROM 2c of the control unit 2.

Using the judgement value D' after correction obtained in the step S6, judgement is made whether the air pressure is loweror not by the following equation (5) (Step S7). In the equation (5), for example, $D_{TH1} = D_{TH2} = 0.1$.

$$D' < -D_{TH1} \text{ or } D' > D_{TH2} \qquad (5)$$

As a result, if the judgement value D' satisfies the equation (5), then it is judged that the air pressure has decreased. If the same judgements are made for a plurality of times continuously, then an alarm is issued (Step S9). On the contrary, if the judgement value D' does not satisfy the equation (5), then it is judged that the air pressure has not decreased, or if the same judgements are made for only one or two times, then an alarm is not given (Step S8). That is to say, because issuance or inhibition of alarm is not carried out every time when judgement is made whether the air pressures is lowered or the state is in normal inner pressure, but it is carried out when the same judgements are given continuously to some extent for plural periods, issuance/non-issuance of alarm under effect of abrupt factor such as noise can be prevented.

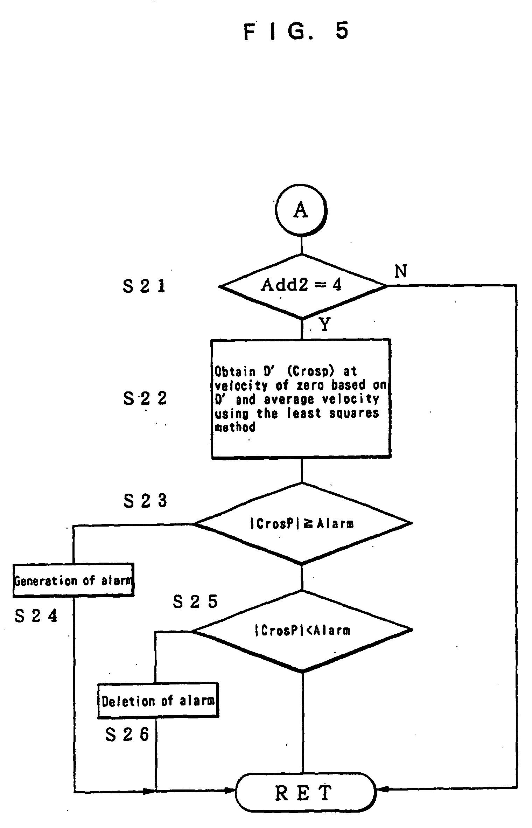

By the way, in the case where the air pressure of any tyre Wi of the tyres Wi is low, if the vehicle is running at a relatively low velocity, the angular velocity of rotation Fi of the tyre Wi becomes faster than the angular velocity of rotation Fi of the normal pressure tyre Wi, so that the judgement value D' satisfies the equation (5) in the Step S7. On the contrary, in the case where the vehicle is running at a relatively high velocity, there are cases to show little difference between the angular velocity of rotation Fi of the tyre Wi whose air pressure has decreased and the angular velocity of rotation Fi of a tyre Wi whose inner pressure is normal. In such a case, there is a high possibility for the judgement value D' to become zero, so that the air pressure of the tyre Wi is judged to be normal in the above Step 7. Accordingly, in the present embodiment, so that when the vehicle is operated at a high velocity, the judgement value D' is decreased a in secondary function manner (refer to Figure 5), and then the judgement value D' at a low velocity by the secondary function is obtained. Then, even if the vehicle is running at a relatively high velocity, and when the vehicle is being driven, a preparation process for generation of an alarm (hereinafter referred to as velocity regression pressure decrease judgement method) is carried out (Step S10).

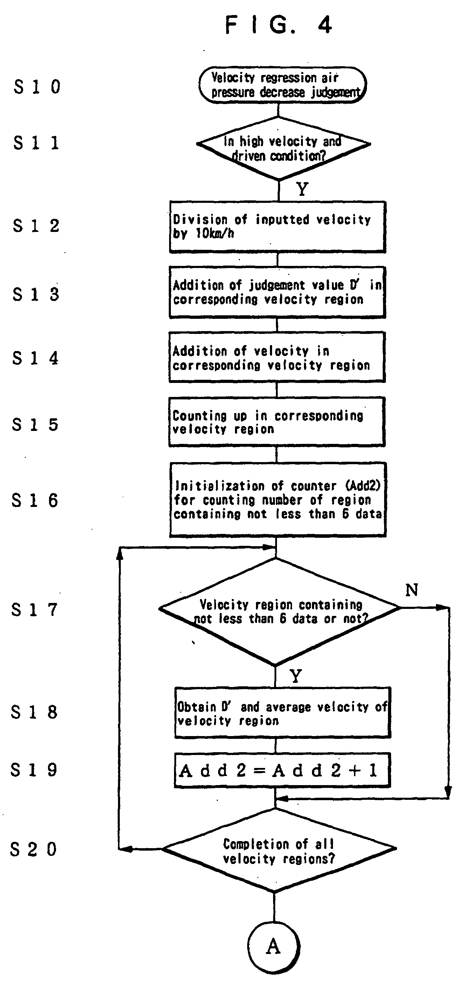

Next, the details of the above are explained with reference to the flow chart of Figure 4.

First, in order to carry out a velocity regression pressure decrease judgement method only when the vehicle is running at a relatively high velocity and in driving condition, identification is made as to whether the vehicle velocity V is higher than a predetermined threshold value $V_{TH}$ (for example, $V_{TH}$=120 km/h) and as to whether the forward and backward acceleration A for identifying whether the vehicle is in a driven state and the acceleration is higher than a predetermined threshold value $A_{TH}$ (for example, $A_{TH}$ = 0 G) (Step S11) is carried out.

If the vehicle velocity V is less than the predetermined threshold value $V_{TH}$ and the forward and deceleration A is less than the threshold value $A_{TH}$, no problem as described above occurs, so that it is unnecessary to carry out the velocity regression pressure decrease judgement method as described hereinafter. Also, in the case of judgement that the vehicle velocity V is less than the threshold value $V_{TH}$ or the forward and deceleration A is less than the threshold value $A_{TH}$, no velocity regression pressure decrease judgement method is applied. In such cases, without undergoing the steps S12-S25, the sequence returns to the step S1. On the other hand, when the vehicle velocity V is judged to be higher than the threshold value $V_{TH}$ and the acceleration A is higher than the threshold value $A_{TH}$, then the velocity regression pressure decrease judgement method of S12-S26 as described below is applied.

The process begins by classifying the velocity V by regions (Step S12). To explain step S12, assuming for example to the classification of the velocity into the regions of 1 to 14 for 10 km/h from 120 km/h, if the velocity V at present is for example 135 km/h, since the velocity in the range of 120 km/h is in region of 1, the data for 135 km/h comes in to the 130 km/h range, so that it is included in region 2. The number of regions is determined by the allowable velocity of vehicle.

When the above processing is over, the current judgement value D' and velocity V are added to the velocity range allocated by the step S12 (Steps S13, S14). To explain concretely steps S13 and S14, as will be understood from the flow chart of Figure 3, the velocity regression pressure loss judgement processing is carried out every second, and when the vehicle is judged to be running at a high velocity and to be in the driven state steps S12 - S26 as shown in Figure 4 are carried out. Accordingly, when the vehicle is judged to be running at a high velocity and in driven state, the processing is carried out such as to put the velocity V and the judgement value D' every second into the corresponding region, and to add the value to the value added up so far.

Next, counting up is made to count the number of data in the currently corresponding velocity region (Step S15). To summarise steps S11-S15 here, the velocity V and the judgement value D' for every second, usable for the velocity regression pressure loss judgement processing for the vehicle at a high velocity and in the driven state, are added up for the divided region, and the number of the data in the region is counted.

Next, examination is made to see to whether there is any velocity region having less that six data, (Step 17). If there is, each average of the judgement value D' and the velocity V added so far in said region is obtained (Step S18) to count up how many regions containing not less than 6 data have been formed (Step S19). If there is no region, no special operation is made.

If, on completion of these steps, there are three velocity regions containing not less than 6 data, then there is obtained a judgement value D' at the time of the velocity = 0 km/h (CrosP) based on the averaged velocity V and the judgement value D' in the respective region, by the least squares method (Step S21 -S22).

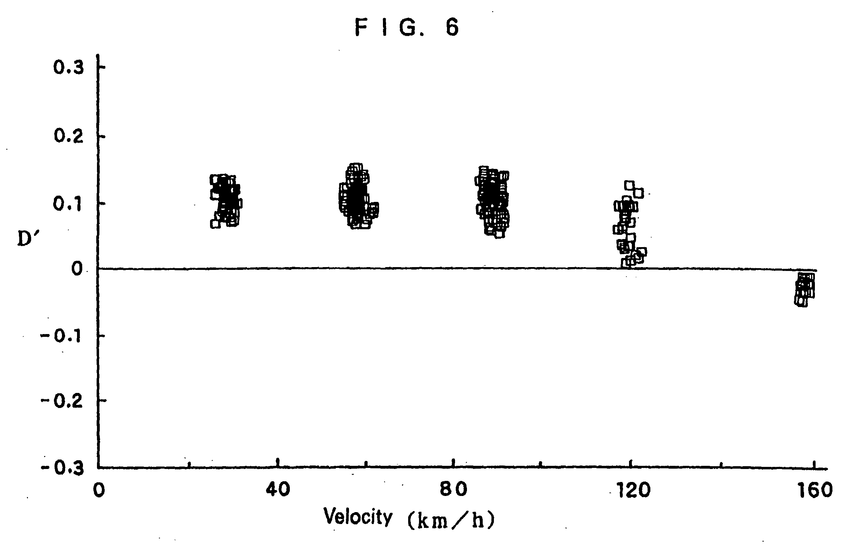

To explain specifically the least squares method, when a velocity V is taken on abscissa and a judgement value D' is taken on ordinate, the averaged velocity V and the judgement value D' corresponding thereto are to be plotted at three points (refer to Figure 6). Next, assuming a secondary curve $y = a X^2 + b$ passing through the centre of these three points, a method of obtaining $\underline{a}$ and $\underline{b}$ so that the total of the squares of the lengths of the lines taken from each point on the secondary curve so as to be parallel with the axis y becomes the minimum, is the least squares method used here. The value b herein corresponds to the above CrosP.

If there are not three velocity regions having not less than 6 data, no special operation is made.

Using the judgement value D' obtained in the step S22 (CrosP) by the equation (5), judgement is made as to whether the air pressure is low or not (Step S23 - S26). In the equation (6), for example, $D_{HTH1} = D_{HTH2} = 0.1$.

$$|CrosP| < -D_{HTH1} \text{ or } |CrosP| < -D_{HTH2} \qquad (6)$$

As a result, if the judgement value CrosP satisfies the equation (6), then it is judged that the air pressure has decreased, and an alarm is issued (Step 24). On the other hand, if the judgement value CrosP does not satisfy the equation (6), then it is judged that the air pressure has not decreased, and an alarm is cancelled (Step S26). When the various conditions are met and a judgement of an alarm has been given, the variables in all velocity regions are cleared.

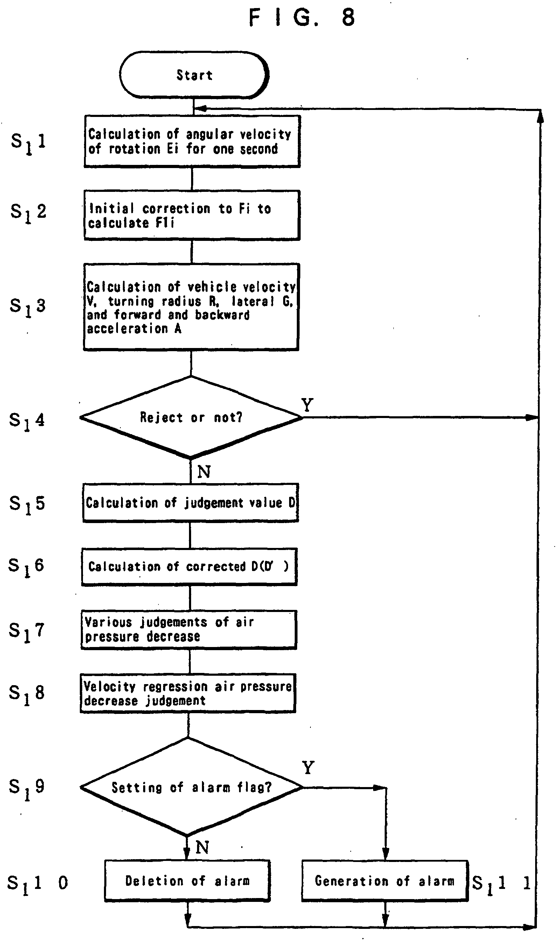

Next, another embodiment of the present invention is described. As shown in Figure 8, the steps $S_1 1 - S_1 6$ are the same as the steps S1-S6, in which, after termination of the step $S_1 5$, the program advances to the step $S_1 6$, and then, using the judgement value D' obtained in the step $S_1 6$, various judgements on pressure decrease are made (Step $S_1 7$). In the judgement on pressure decrease, judgement is made as to whether the air pressure has decreased or not by the equation (7), wherein, for example, $D_{TH1} = D_{TH2} = 0.1$.

$$D' < -D_{TH1} \text{ or } D' > D_{TH2} \qquad (7)$$

As a result, if the judgement value D' satisfies the equation (7), the alarm flag is set, while if not, the alarm flag is cleared.

Next, the velocity regression pressure loss judgement is carried out (Step $S_1 8$),.which will be described in detail below. As a result, if the judgement value satisfies the alarm judgement conditions, an alarm flag is set, while if not, the alarm flag is cleared. Further, processing is made so that, if the alarm flag is set, then the alarm lamp is put on, and if not, the alarm lamp is put off (Steps $S_1 9 - S_1 11$).

By the way, in the same manner as in the foregoing embodiment, in the case where the air pressure of any tyre Wi of the tyres Wi is decreased, when the vehicle is running at a relatively low velocity, the angular velocity of rotation Fi of the tyre Wi becomes faster than the angular velocity of rotation Fi of the normal inner pressure tyre Wi, so that the judgement value D' satisfies the alarm judgement conditions in the above Step $S_1 7$. Against this, in the case where the vehicle is running at a relatively high velocity, then there is only a small difference between the angular velocity of rotation Fi of the tyre Wi whose air pressure has decreased and the angular velocity of rotation Fi of the tyre Wi whose inner pressure is normal. In such a case, there is a high possibility for the judgement value D' to become zero, and the air pressure of the tyre Wi is then judged to be normal in the Step $S_1 7$. However, it is known that, even when the vehicle is operated at a high velocity, if it is being driven, according to the increase in velocity from a certain level, the judgement value D' decreases in secondary function manner (refer to Figure 6).

Accordingly, in the present embodiment, it is designed to obtain the judgement value D' at a low velocity by the secondary function, and even when the vehicle is running at a relatively high velocity, only in the case of the vehicle being driven, a preparation process for generation of alarm is carried out again.

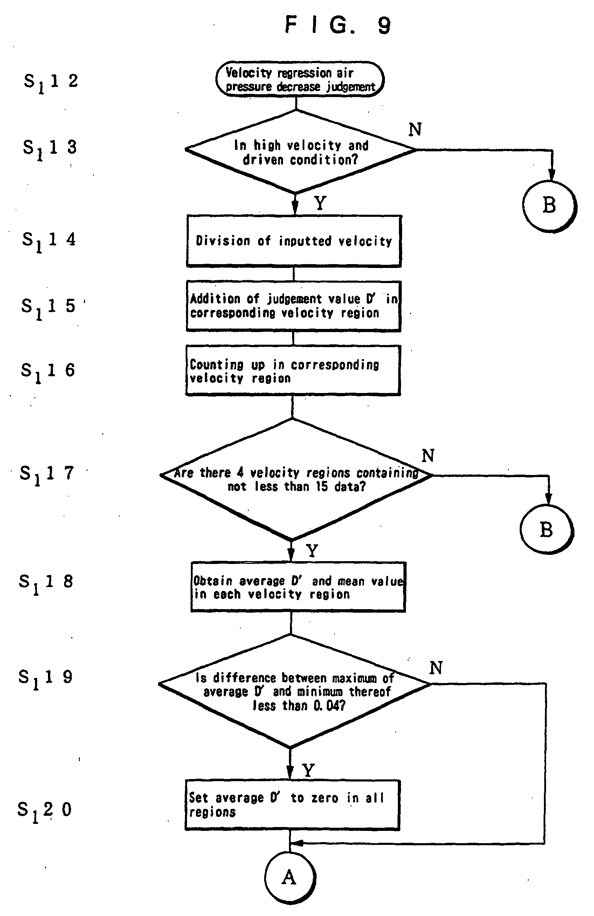

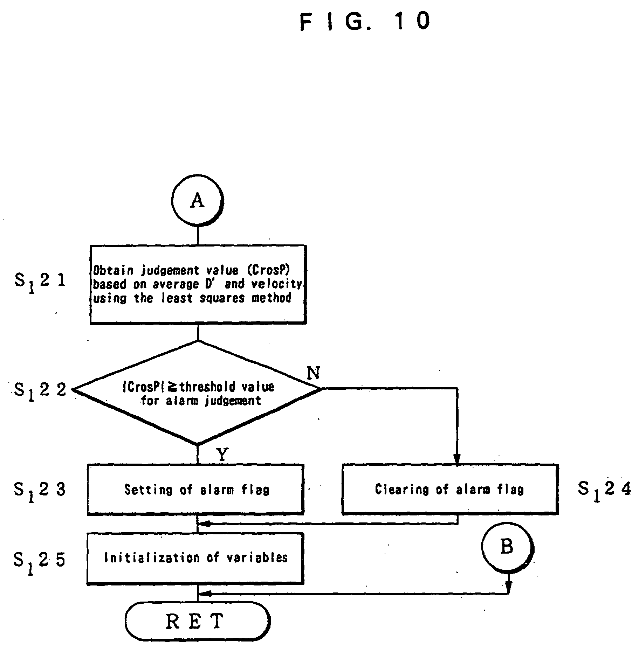

Next, the details of the above are explained with reference to the flow chart of Figures 9 and 10.

First, in order to carry out a velocity regressive pressure decrease judgement method only in the case where the vehicle is running at a relatively high velocity and in a driven condition, identification is made as to whether the vehicle velocity V is higher than the predetermined threshold value $V_{TH}$ (for example, $V_{TH}=85$ km/h) or as to whether the acceleration A for identifying whether the vehicle is in driven state or not is higher than the predetermined threshold value $A_{TH}$ for example, $A_{TH}=0G$ or -0.03G) (Step $S_1 13$).

If, as a result, it is judged that the vehicle velocity V is less than the predetermined threshold value $V_{TH}$ or the forward and backward acceleration A is less than the threshold value $A_{TH}$, no phenomenon as described above should occur, so that the velocity regression pressure decrease judgement method as described hereinafter is not applied. In such a case, without undergoing the steps $S_1 14 - S_1 25$, the sequence returns to the step $S_1 9$. On the other hand, in the case where the vehicle velocity V is judged to be higher than the threshold value $V_{TH}$ and the forward and backward acceleration A to be higher than the threshold value $A_{TH}$, the velocity regression pressure decrease judgement method in the steps $S_1 14 - S_1 25$ as described later is applied.

In the velocity regression pressure decrease judgement method, the process begins with the practice of classifying the velocity V at present by regions (Step $S_1 14$). To explain the step $S_1 14$ concretely, assuming for example to classify the velocity into the regions of 1 to 14 by 5 km/h from 85 km/h to 155 km/h, if the velocity V at present is for example 100 km/h, since the velocity in the range of 85 km/h is in the region of 1, the data of 100 km/h comes under the 100 km/h range, so that it is to be included in the region of 4. The number of divisional regions is determined by the maximum velocity of vehicle.

When the above processing is over, the current judgement value D' and velocity V are added to the velocity region allocated by the step $S_1 14$ (Step $S_1 15$). To explain specifically the step $S_1 15$, as will be understood from the flow chart of Figure 8, the velocity regression pressure decrease judgement processing is carried out every second, and when the vehicle is judged to be running at a high velocity and in driven state from the velocity V and the acceleration A, the steps $S_1 14$- $S_1 25$ as shown in Figures 9 and 10 are carried out. Accordingly, when the vehicle is judged to be running at a high velocity and in driven state, the processing is carried out such as to put the velocity V and the judgement value D' at every second into the corresponding region, and to add the value to the values added up so far.

Next, to count the number of the data in the currently corresponding velocity region (Step $S_1 16$). To summarise the steps $S_1 14$- $S_1 16$ here, the velocity V and the judgement value D' at every second, which are usable for the velocity regression pressure decrease judgement processing, are added up to the divided region, and the number of the counters in the corresponding region is increased by one.

Next, examination is made as to whether there are in all regions the predetermined number (e.g. four regions) of velocity regions having not less than the predetermined number (.e.g. 15) of data or not (Step $S_1 17$). If there is, an average of the judgement value D' added so far in the region and mean value of each velocity region are obtained (Step $S_1 18$).

Further, when the difference between the maximum value and the minimum value of the average D' is less than the predetermined threshold value, i.e. 0.04, then the average D' in all regions is set to be zero (Step $S_1 19$- $S_1 20$). In this case, the alarm judgement value to be ultimately obtained should be made zero, so that no alarm is detected.

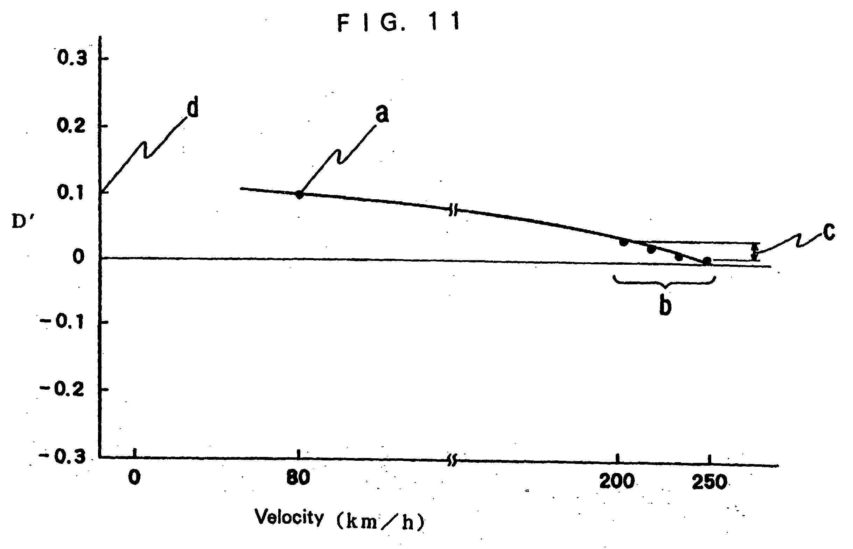

In the present invention, the steps $S_1 19$-$S_1 20$ are not to be limited to them. For example, when operation is made from the region to be used for the least squares method or from the relation of the average D' in the steps $S_1 19$- $S_1 20$, there is an apprehension to produce erroneous judgement. For example, with respect to the judgement value $\underline{a}$ obtained by regression, even if, as shown in Figure 11, the regression data are gathered in the four velocity ranges which are considerably separated from the medium and low velocities and the judgement value of the data show decrease against the increase in velocities, in the case where the difference $\underline{c}$ between the maximum value and the minimum value is of a dispersion degree within a normal inner pressure of, for example, not more than 0.03, there is a possibility for erroneous judgement to be led out if a regression curve is obtained on the basis of such value. The value $\underline{d}$ in Figure 11 is an alarm judgement threshold value.

Also, in the steps $S_1 19$- $S_1 20$, when the high velocity regions (e.g. higher than 150 km/h) and the regions to be used for the least squares method are near (e.g. the four regions are all adjacent), the average D' can be set to zero.

Alternatively, in the steps $S_1 19$-$S_1 20$, by the region of the lower limit velocity of the average D' (e.g. at the time of 150 km/h), the threshold value of the alarm judgement can be changed (e.g. to provide a variant for duplication).

Furthermore, in the steps $S_1 19$-$S_1 20$, by the region of the lower limit velocity of the average D' (e.g. at the time of 150 km/h), the average D' of the lower limit velocity might be weighted (e.g. to make two part equivalents).

If, on completion of these work steps, there are four regions containing not less than 15 data, then the judgement value D' at a low velocity (CrosP) is obtained by the least squares method, based on the intermediate velocity V averaged in the respective regions and the average D' (Step $S_1 21$).

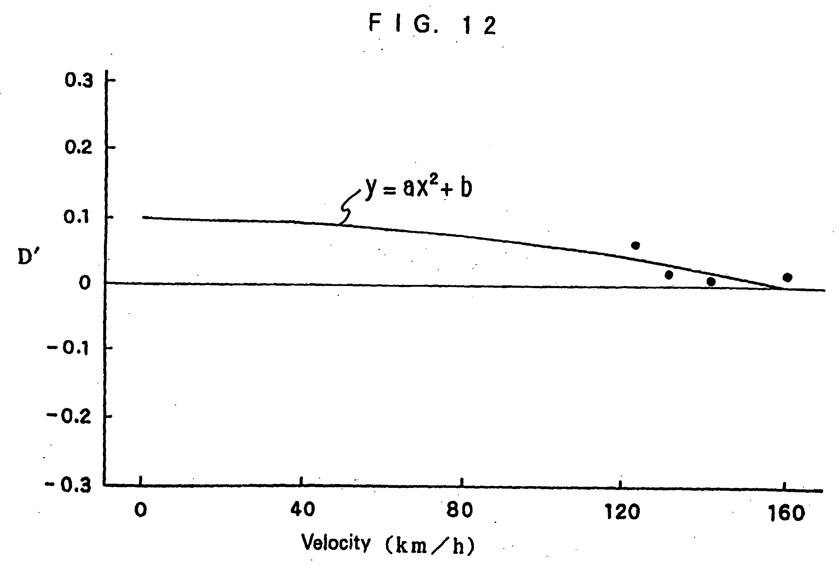

To explain specifically the least square method, when a velocity V is taken on abscissa and an identification value D' is taken on ordinate, the intermediate velocity V in each region obtained from the above the judgement value D' corresponding thereto are to be plotted at four points (refer to Figure 12). Next, assuming a secondary curve $y = a X^2 + b$ passing through the centre of these four points, a method of obtaining $\underline{a}$ and $\underline{b}$ in such a manner that the total of the squares of the lengths of the lines taken from each point n the secondary curve so as to be parallel with the axis y becomes the minimum, is the least square method used here. The value $\underline{b}$ herein corresponds to the above CrosP.

If there is not four velocity regions having not less than 15 data, no special operation is made.

Using the judgement value D' (CrosP) obtained in the step $S_1 21$, judgement is made as to whether the air pressure is decreased or not (Step $S_1 22$- $S_1 25$) by the equation (8). In the next equation (8), for example, $D_{HTH1} = D_{HTH2} = 0.1$.

$$CrosP < -D_{HTH1} \text{ or } CrosP < -D_{HTH2} \qquad (8)$$

As a result, if the judgement value CrosP satisfies the equation (8), then it is judged that the air pressure has decreased, and an alarm flag is set (Step $S_1 23$). On the other hand, if the judgement value CrosP does not satisfy the equation (8), then it is judged that the air pressure has not decreased, and the alarm flag is cleared (Step $S_1 24$). When various conditions are met and a judgement if alarm is given, the variables in all velocity regions are cleared (Step $S_1 25$).

As described above, according to the present invention, there are provided a plurality of judging means suited respectively to the vehicle running conditions. Accordingly, the judgement according to the vehicle running condition can be realised in any judging means. Consequently, it is possible to detect accurately whether or not tyre air pressure decreases regardless of the vehicle running condition, and as a result it is possible to prevent erroneous issuance or non-issuance of alarm. Since this invention thus serves to improve the driver's reliability on the alarm, improvement of traffic safety can be expected.

Furthermore, in addition to the judging means for low velocity to carry out judgement on detection of the angular velocity of rotation, there is provided judging means for high velocity such as to carry out judgement if the conditions such that, after the detection of the angular velocity of rotation, the vehicle velocity is not less than the threshold value and yet the vehicle is in driven state are satisfied. Therefore, regardless of the running velocity level of the vehicle, accurate detection can be made as to whether the air pressure of the tyre has decreased or not. Accordingly, erroneous issuance or non-issuance of alarm can be prevented.

Consequently, since it is possible to improve the driver's reliability to the alarm, improvement of traffic safety can be expected.

**Claims**

1. A method for detecting decrease of tyre air pressure in a moving vehicle having four tyred wheels (W1,... W4), comprising the steps of:

   - in a first step, detecting and calculating each angular velocity ($F_1,...,F_4$) of rotation of the four tyred wheels (step S1);
   - correcting angular velocity of at least one wheel to compensate for initial difference in rolling radii between the tyres due to manufacturing differences and calculating corrected angular velocities ($F1_1,...,F1_4$) (step S2);
   - calculating a judgement value (D) based on corrected angular velocities ($F1_1,...,F1_4$) (step S5);
   - judging in a judgement step for low velocity as to whether the tyre air pressure is decreased or not based on the judgement value (D) (step S7);
   - issuing alarm when it is judged that the air pressure is lowered (steps S8-S9);
   - detecting the velocity (V) of the vehicle (steps S10,S11);
   - detecting whether the vehicle is run in a driven condition (steps S10,S11);
   - carrying out the following velocity regression pressure decrease judgement steps for high velocity only when both the velocity (V) of the vehicle is higher than a threshold value ($V_{TH}$) and the vehicle is run in a driven condition (step S11), otherwise return to the first step (S1):

     - classifying the vehicle velocity by regions (step S12);
     - adding the judgement value (D) to the corresponding velocity region (step S13);
   - adding the vehicle velocity (V) to the corresponding velocity region (step S14);
   - when each of a first number of velocity regions contains at lest a second number of data (step S17), obtain an average of the judgement values (D) and an average of the velocity data (V) added in the velocity regions (step S18), otherwise return to the first step (step S1);
   - assuming a second order function ($y = ax^2 + b$) of judgement value as depended variable (y) and velocity as independent variable (x) from the values of the average of the judgement values (D) and the values of the average of the. velocity data (V) of the velocity regions by a least squares method (step S22);
   - obtaining from the second order function a high velocity judgement function value (crosp) (step S22);
   - judging in a judgement step for high velocity as to whether the tyre air pressure is decreased or not based on the high velocity judgement function value (crosp) (step S23);
   - issuing alarm when it is judged that the air pressure is lowered (steps S24).

2. The method of claim 1, **characterised by** the step of correcting the first pressure judgement value according to at least one of a turning radius of the vehicle, the vehicle velocity, a lateral acceleration of the vehicle, and forward and backward acceleration of the vehicle.

3. An apparatus for detecting decrease of tyre air pressure comprising angular velocity calculating means (2; S1) for calculating angular velocity ($F_1,...,F_4$) for each wheel ($W_1,...,W_4$) of a vehicle angular velocity correcting; means (2; S2) for correcting angular velocity of at least one wheel to compensate for uneven rolling radii of respective tyres due to manufacturing tolerances; first pressure judgement value calculating means (2;S5) for calculating a first pressure judgement value (D) based on corrected angular velocity ($F1_1,...,F1_4$) of all the wheels; first activating means (2; S7-S9) for activating an alarm when the first pressure judgement value (D) is greater than a predetermined pressure judgement value; vehicle velocity detecting means (1-2; S10-S11) for detecting the velocity (V) of the vehicle, second pressure judgement value calculating means (2; S10) for calculating a second pressure judgement value (Crosp) based on angular velocity of all the wheels when the velocity (V) and acceleration (A) of the vehicle are greater than a predetermined vehicle velocity value and a predetermined vehicle acceleration value, wherein the second pressure judgement value calculating means (2; S10) further includes: storing means (2d) for storing a plurality of vehicle velocity values (V) and first pressure judgement values (D), dividing means (2; S12-S14) for dividing the vehicle velocity values (V) into a plurality of regions at predetermined intervals and for adding each velocity value and associated first pressure judgement value to the corresponding region, average velocity value calculating means (2; S17-S18) for calculating an average velocity value for each region when each region includes a predetermined number of vehicle velocity values and second order function deriving means (2,S22) for calculating the second judgement value from a second order function ($y = ax^2 + b$) derived from a least squares method which employs a predetermined number of average velocity values and associated first pressure judgement values; and means wherein the apparatus further comprises second alarm activating for activating the alarm when the second (2; S23-S26) pressure judgement value is greater than the predetermined pressure judgement value.

4. The apparatus of claim 3, **characterised by** means for correcting the first pressure judgement value according to at least one of a turning radius of the vehicle, the vehicle velocity, a lateral acceleration of the vehicle, and at least one of forward and backward acceleration of the vehicle.

5. A method for detecting decrease of tyre air pressure in a moving vehicle having four tyred wheels (W1,..., W4), comprising the steps of:

- in a first step, detecting and calculating each angular velocity (F1,...,F4) of rotation of the four tyred wheels (step $S_1$1);
- correcting angular velocity of at least one wheel to compensate for initial difference in rolling radii between the tyres due to manufacturing differences and calculating corrected angular velocities ($F_1$1,...,$F_1$4) (step $S_1$2);
- calculating a judgement value (D) based on the corrected angular velocities ($F_1$1,...,$F_1$4) (step $S_1$5);
- carrying out the following velocity regression pressure judgement steps for high velocity only when both the velocity (V) of the vehicle is higher than a threshold value ($V_{TH}$) and the vehicle is running in a driven condition (step $S_1$8, $S_1$12, $S_1$13), otherwise return to the first step;

  - classifying the vehicle velocity by regions (step $S_1$14);
  - adding the judgement value (D) to the corresponding velocity region (Step $S_1$15);
  - when each of a first number of velocity regions contains at least a second number of data (step $S_1$17), obtain an average of the judgement values (D) added in the velocity regions and mean value of each velocity region (step $S_1$18), otherwise return to the first step (step $S_1$1);

- judging whether the difference between the maximum value and the minimum value of the average (D) is less than the predetermined threshold value (step $S_1$19);
- assuming a second order function ($y = ax^2 + b$) of judgement value as dependent variable (y) and velocity as independent variable (x) from the values of the average of the judgement values (D) and the mean value of each velocity region by a least squares method (step $S_1$21);
- obtaining from the second order function a low velocity judgement function value (crosp) (step $S_1$21);
- judging whether the tyre air pressure is decreased or not based on the low velocity judgement function value (crosp) (step $S_1$22);
- issuing alarm when it is judged that the air pressure is lowered (step $S_1$9, $S_1$11, $S_1$23).

## Patentansprüche

1. Verfahren zum Erfassen einer Abnahme des Reifenluftdrucks in einem sich bewegenden Fahrzeug mit vier bereiften Rädern ($W_1$, ..., $W_4$), das die folgenden Schritte umfasst:

- in einem ersten Schritt Erfassen und Berechnen der Winkelgeschwindigkeiten ($F_1$, ..., $F_4$) der Umdrehung der vier bereiften Räder (Schritt S1);
- Korrigieren der Winkelgeschwindigkeit von wenigstens einem Rad, um die Anfangsdifferenz zwischen den Reifen hinsichtlich der Rollradien infolge von Herstellungstoleranzen zu kompensieren, und Berechnen korrigierter Winkelgeschwindigkeiten ($F1_1$, ..., $F1_4$) (Schritt S2);
- Berechnen eines Entscheidungswerts (D) anhand korrigierter Winkelgeschwindigkeiten ($F1_1$, ..., $F1_4$) (Schritt S5);
- Entscheiden in einem Entscheidungsschritt für niedrige Geschwindigkeit, ob der Reifenluftdruck abgenommen hat oder nicht, anhand des Entscheidungswerts (D) (Schritt S7);
- Ausgeben eines Alarms, wenn entschieden worden ist, dass der Luftdruck abgenommen hat (Schritte S8-S9);
- Erfassen der Geschwindigkeit (V) des Fahrzeugs (Schritte S10, S11);
- Erfassen, ob das Fahrzeug in einem angetriebenen Zustand gefahren wird (Schritte S10, S11);

- nur dann, wenn sowohl die Geschwindigkeit (V) des Fahrzeugs höher als ein Schwellenwert ($V_{TH}$) ist als auch das Fahrzeug in einem angetriebenen Zustand gefahren wird, Ausführen der folgenden Geschwindigkeitsregressions-Druckabnahme-Entscheidungsschritte für hohe Geschwindigkeit (S11), andernfalls Rückkehr zum ersten Schritt (S1);

  - Klassifizieren der Fahrzeuggeschwindigkeit nach Bereichen (Schritt S12);
  - Hinzufügen des Entscheidungswerts (D) zu dem entsprechenden Geschwindigkeitsbereich (Schritt S13);
  - Hinzufügen der Fahrzeuggeschwindigkeit (V) zu dem entsprechenden Geschwindigkeitsbereich (Schritt S14);
  - wenn jeder einer ersten Anzahl von Geschwindigkeitsbereichen wenigstens eine zweite Anzahl von Daten enthält (Schritt S17), Erlangen eines Mittelwerts der Entscheidungswerte (D) und eines Mittelwerts der Geschwindigkeitsdaten (V), die in den Geschwindigkeitsbereichen hinzugefügt worden sind (Schritt S18), andernfalls Rückkehr zum ersten Schritt (S1);
  - Annehmen einer Funktion zweiter Ordnung ($y = a x^2 + b$) mit dem Entscheidungswert als abhängige Variable (y) und der Geschwindigkeit als unabhängige Variable (x) aus den Werten des Mittelwerts der Entscheidungswerte (D) und den Werten des Mittelwerts der Geschwindigkeitsdaten (V) der Geschwindigkeitsbereiche nach einer Methode der kleinsten Quadrate (Schritt S22);
  - Erlangen eines Entscheidungsfunktionswerts (crosp) für hohe Geschwindigkeit aus der Funktion zweiter Ordnung (Schritt S22);
  - Entscheiden in einem Entscheidungsschritt für hohe Geschwindigkeit, ob der Reifenluftdruck abgenommen hat oder nicht, anhand des Entscheidungsfunktionswerts (crosp) für hohe Geschwindigkeit (Schritt S23);
  - Ausgeben eines Alarms, wenn entschieden worden ist, dass der Luftdruck abgenommen hat (Schritt S24).

2. Verfahren nach Anspruch 1, **gekennzeichnet durch** den Schritt, in dem der erste Druck-Entscheidungswert entsprechend wenigstens einer der Größen: Wenderadius des Fahrzeugs, Fahrzeuggeschwindigkeit, Seitenbeschleunigung des Fahrzeugs und Vorwärts- und Rückwärtsbeschleunigung des Fahrzeugs korrigiert wird.

3. Vorrichtung zum Erfassen einer Abnahme des Reifenluftdrucks, umfassend Winkelgeschwindigkeit-Berechnungsmittel (2; S1) zum Berechnen der Winkelgeschwindigkeit ($F_1, ..., F_4$) für jedes Rad ($W_1, ..., W_4$) eines Fahrzeugs; Winkelgeschwindigkeit-Korrekturmittel (2; S2) zum Korrigieren der Winkelgeschwindigkeit wenigstens eines Rads, um ungleichmäßige Rollradien jeweiliger Reifen infolge von Herstellungstoleranzen zu kompensieren; erste Druck-Entscheidungswert-Berechnungsmittel (2; S5) zum Berechnen eines ersten Druck-Entscheidungswerts (D) anhand korrigierter Winkelgeschwindigkeiten ($F1_1, ..., F1_4$) aller Räder; erste Aktivierungsmittel (2; S7-S9) zum Aktivieren eines Alarms, wenn der erste Druck-Entscheidungswert (D) größer als ein vorgegebener Druck-Entscheidungswert ist; Fahrzeuggeschwindigkeit-Erfassungsmittel (1-2; S10-S11) zum Erfassen der Geschwindigkeit (V) des Fahrzeugs; zweite Druck-Entscheidungswert-Berechnungsmittel (2; S10) zum Berechnen eines zweiten Druck-Entscheidungswerts (crosp) anhand der Winkelgeschwindigkeiten aller Räder, wenn die Geschwindigkeit (V) und die Beschleunigung (A) des Fahrzeugs größer als ein vorgegebener Fahrzeuggeschwindigkeitswert und ein vorgegebener Fahrzeugbeschleunigungswert sind, wobei die Mittel zum Berechnen des zweiten Druck-Entscheidungswerts (2; S10) ferner umfassen: Speichermittel (2d) zum Speichern mehrerer Fahrzeuggeschwindigkeitswerte (V) und erster Druck-Entscheidungswerte (D), Unterteilungsmittel (2; S12-S14) zum Unterteilen der Fahrzeuggeschwindigkeitswerte in mehrere Bereiche an vorgegebenen Intervallen und zum Hinzufügen jedes Geschwindigkeitswerts und jedes zugeordneten ersten Druck-Entscheidungswerts zu dem entsprechenden Bereich, Mittel zum Berechnen des mittleren Geschwindigkeitswerts (2; S17-S18) zum Berechnen eines mittleren Geschwindigkeitswerts für jeden Bereich, der eine vorgegebene Anzahl von Fahrzeuggeschwindigkeitswerten enthält, und Mittel zum Herleiten einer Funktion zweiter Ordnung (2; S22) zum Berechnen des zweiten Entscheidungswerts aus einer Funktion zweiter Ordnung ($y = a x^2 + b$), die nach einer Methode der kleinsten Quadrate, die eine vorgegebene Anzahl von mittleren Geschwindigkeitswerten und zugeordneten ersten Druck-Entscheidungswerten verwendet, hergeleitet worden ist; wobei die Vorrichtung ferner zweite Alarmaktivierungsmittel (2; S23-S26) zum Aktivieren des Alarms, wenn der zweite Druck-Entscheidungswert größer als der vorgegebene Druck-Entscheidungswert ist, umfasst.

4. Vorrichtung nach Anspruch 3, **gekennzeichnet**

**durch** Mittel zum Korrigieren des ersten Druck-Entscheidungswerts entsprechend wenigstens einer der Größen: Wenderadius des Fahrzeugs, Fahrzeuggeschwindigkeit, Seitenbeschleunigung des Fahrzeugs und Vorwärts- und/oder Rückwärtsbeschleunigung des Fahrzeugs.

5. Verfahren zum Erfassen einer Abnahme des Reifenluftdrucks in einem sich bewegenden Fahrzeug mit vier bereiften Rädern ($W_1$, ..., $W_4$), das die folgenden Schritte umfasst:

- in einem ersten Schritt Erfassen und Berechnen der Winkelgeschwindigkeit ($F_1$, ..., $F_4$) der Umdrehung der vier bereiften Räder (Schritt $S_1 1$);
- Korrigieren der Winkelgeschwindigkeit von wenigstens einem Rad, um die Anfangsdifferenz zwischen den Reifen hinsichtlich der Rollradien infolge von Herstellungstoleranzen zu kompensieren, und Berechnen korrigierter Winkelgeschwindigkeiten ($F_1 1$, ..., $F_4 4$) (Schritt $S_1 2$);
- Berechnen eines Entscheidungswerts (D) anhand der korrigierten Winkelgeschwindigkeiten ($F_1 1$, ..., $F_4 4$) (Schritt $S_1 5$);
- stets dann, wenn sowohl die Geschwindigkeit (V) des Fahrzeugs höher als ein Schwellenwert ($V_{TH}$) ist als auch das Fahrzeug in einem angetriebenen Zustand gefahren wird, Ausführen der folgenden Geschwindigkeitsregressions-Druckabnahme-Entscheidungsschritte für hohe Geschwindigkeit (Schritt $S_1 8$, $S_1 12$, $S_1 13$), andernfalls Rückkehr zum ersten Schritt;

  - Klassifizieren der Fahrzeuggeschwindigkeit nach Bereichen (Schritt $S_1 14$);
  - Hinzufügen des Entscheidungswerts (D) zu dem entsprechenden Geschwindigkeitsbereich (Schritt $S_1 15$);
  - wenn jeder einer ersten Anzahl von Geschwindigkeitsbereichen wenigstens eine zweite Anzahl von Daten enthält (Schritt $S_1 17$), Erlangen eines Mittelwerts der in den Geschwindigkeitsbereichen hinzugefügten Entscheidungswerte (D) und eines Mittelwerts jedes Geschwindigkeitsbereichs (Schritt $S_1 18$), andernfalls Rückkehr zum ersten Schritt ($S_1 1$);
  - Entscheiden, ob die Differenz zwischen dem Maximalwert und dem Minimalwert des Mittelwerts (D) kleiner als der vorgegebene Schwellenwert ist (Schritt $S_1 19$);
  - Annehmen einer Funktion zweiter Ordnung ($y = a x^2 + b$) mit dem Entscheidungswert als abhängige Variable (y) und der Geschwindigkeit als unabhängige Variable (x) aus den Werten des Mittelwerts der Entscheidungswerte (D) und dem Mittelwert jedes Geschwindigkeitsbereichs nach einer Methode der kleinsten Quadrate (Schritt $S_1 21$);
  - Erlangen eines Entscheidungsfunktionswerts (crosp) für niedrige Geschwindigkeit aus der Funktion zweiter Ordnung (Schritt $S_1 21$);
  - Entscheiden, ob der Reifenluftdruck abgenommen hat oder nicht, anhand des Entscheidungsfunktionswerts (crosp) für niedrige Geschwindigkeit (Schritt $S_1 22$);

- Ausgeben eines Alarms, wenn entschieden worden ist, dass der Luftdruck abgenommen hat (Schritt $S_1 9$, $S_1 11$, $S_1 23$).

**Revendications**

1. Procédé de détection de la réduction de pression pneumatique d'un pneumatique dans un véhicule en déplacement possédant quatre roues munies de pneumatiques (W1,... W4), comprenant les étapes suivantes :

  dans une première étape, la détection et le calcul de chaque vitesse angulaire ($F_1$, ... $F_4$) de rotation des quatre roues munies de pneumatiques (pas S1),
  la correction de la vitesse angulaire d'au moins une roue pour la compensation de la différence initiale entre les rayons de roulement des pneumatiques due aux différences de fabrication, et le calcul de vitesses angulaires corrigées ($F1_1$,... $F1_4$) (pas S2),
  le calcul d'une valeur de jugement (D) d'après les vitesses angulaires corrigées ($F1_1$,... $F1_4$) (pas S5),
  le jugement, dans une étape de jugement de faible vitesse, du fait que la pression pneumatique du pneumatique est réduite ou non d'après la valeur de jugement (D) (pas S7),
  l'émission d'une alarme lorsqu'il est déterminé que la pression pneumatique est abaissée (pas S8 et S9),
  la détection de la vitesse (V) du véhicule (pas S10, S11),
  la détection du fait que le véhicule se déplace à l'état mené (pas S10, S11),
  l'exécution des étapes suivantes de jugement de réduction de pression par régression de vitesse pour une vitesse élevée uniquement lorsque la vitesse (V) du véhicule est supérieure à une valeur de seuil ($V_{TH}$) et simultanément le véhicule est déplacé à l'état mené (pas S11), avec dans le cas contraire retour à la première étape (S1) :

la classification de la vitesse du véhicule par régions (pas S12),

l'addition de la valeur de jugement (D) à la région correspondante de vitesse (pas S13),

l'addition de la vitesse du véhicule (V) à la région de vitesse correspondante (pas S14),

lorsque chacune des régions d'un premier nombre de régions de vitesse comporte au moins un second nombre de données (pas S17), l'obtention d'une moyenne des valeurs de jugement (D) et d'une moyenne des données de vitesse (V) ajoutées dans les régions de vitesse (pas S18), avec retour dans le cas contraire à la première étape (pas S1),

l'adoption d'une fonction du second ordre ($y = ax^2 + b$) de la valeur de jugement comme variable dépendante (Y) et de la vitesse comme variable indépendante (x) à partir des valeurs de la moyenne des valeurs de jugement (D) et des valeurs de la moyenne des données de vitesse (V) des régions de vitesse par la méthode des moindres carrés (pas S22),

l'obtention, à partir de la fonction du second ordre, d'une valeur d'une fonction de jugement de vitesse élevée (crosp) (pas S22),

le jugement, dans une étape de jugement de vitesse élevée, du fait que la pression pneumatique du pneumatique est réduite ou non d'après la valeur de la fonction de jugement de vitesse élevée (crosp) (pas S23), et

l'émission d'une alarme lorsqu'il est déterminé que la pression pneumatique est réduite (pas S24).

2.  Procédé selon la revendication 1, **caractérisé par** l'étape de correction de la première valeur de jugement de pression en fonction d'au moins un paramètre choisi parmi le rayon de virage du véhicule, la vitesse du véhicule, une accélération latérale du véhicule, et l'accélération vers l'avant et vers l'arrière du véhicule.

3.  Appareil de détection de la réduction d'une pression pneumatique d'un pneumatique, comprenant un dispositif de calcul de vitesse angulaire (2 ; S1) destiné à calculer une vitesse angulaire ($F_1,...F_4$) pour chaque roue ($W_1,... W_4$) d'un véhicule, un dispositif de correction de vitesse angulaire (2 ; S2) destiné à corriger la vitesse angulaire d'au moins une roue pour compenser les rayons non uniformes de roulement des pneumatiques respectifs dus aux tolérances de fabrication, un premier dispositif de calcul de valeurs de jugement de pression (2 ; S5) destiné à calculer une première valeur de jugement de pression (D) d'après une vitesse angulaire corrigée ($F1_1,... F1_4$) de toutes les roues, un premier dispositif d'activation (2 ; S7-S9) destiné à activer une alarme lorsque la première valeur de jugement de pression (D) est supérieure à une valeur prédéterminée de jugement de pression, un dispositif de détection de vitesse du véhicule (1-2 ; S10-S11) destiné à détecter la vitesse (B) du véhicule, un second dispositif de calcul de valeur de jugement de pression (2 ; S10) destiné à calculer une seconde valeur de jugement de pression (crosp) en fonction d'une vitesse angulaire de toutes les roues lorsque la vitesse (V) et l'accélération (A) du véhicule dépassent une valeur prédéterminée de vitesse du véhicule et une valeur prédéterminée d'accélération du véhicule, dans lequel le second dispositif de calcul d'une valeur de jugement de pression (2 ; S10) comporte en outre un dispositif de mémorisation (2d) destiné à mémoriser plusieurs valeurs de vitesse du véhicule (V) et plusieurs premières valeurs de jugement de pression (D), un dispositif de division (2 ; S12-S14) destiné à diviser les valeurs de vitesse du véhicule (V) en plusieurs régions à des intervalles prédéterminés et à ajouter chaque valeur de vitesse et la première valeur de jugement de pression associée à la région correspondante, un dispositif de calcul de valeur de vitesse moyenne (2 ; S17-S18) destiné à calculer une valeur de vitesse moyenne pour chaque région lorsque chaque région comprend un nombre prédéterminé de valeurs de vitesse de véhicule, et un dispositif de dérivation d'une fonction du second ordre (2, S22) destiné à calculer la seconde valeur de jugement à partir d'une fonction du second ordre ($y = ax^2 + b$) dérivée par la méthode des moindres carrés par mise en oeuvre d'un nombre prédéterminé de valeurs de vitesse moyenne et de premières valeurs associées de jugement de pression, dans lequel l'appareil comporte en outre un second dispositif d'activation d'alarme (2 ; S23-S25) destiné à activer l'alarme lorsque la seconde valeur de jugement de pression dépasse la valeur prédéterminée de jugement de pression.

4.  Appareil selon la revendication 3, **caractérisé par** un dispositif de correction de la première valeur de jugement de pression par un paramètre choisi au moins parmi un rayon de virage du véhicule, la vitesse du véhicule, une accélération latérale du véhicule, et au moins une accélération vers l'avant et vers l'arrière du véhicule.

5.  Procédé de détection d'une réduction de la pression pneumatique d'un pneumatique dans un véhicule mobile ayant quatre roues munies de pneumatiques ($W_1,... W_4$), comprenant les étapes

suivantes :

dans une première étape, la détection et le calcul de chaque vitesse angulaire (F1,...F4) de rotation des quatre roues munies de pneumatiques (pas $S_11$),

la correction de la vitesse angulaire d'au moins une roue pour la compensation de la différence initiale de rayon de roulement entre les pneumatiques à cause des différences de fabrication, et le calcul de vitesses angulaires corrigées ($F_11,... F_14$) (pas $S_12$),

le calcul d'une valeur de jugement (D) qui dépend des vitesses angulaires corrigées ($F_11,... F_14$) (pas $S_15$),

l'exécution des étapes suivantes de jugement de pression par régression de vitesse à partir d'une vitesse élevée uniquement lorsque la vitesse (V) du véhicule dépasse une valeur de seuil ($V_{TH}$) et simultanément le véhicule se déplace à un état mené (pas $S_18$, $S_112$, $S_113$), avec dans le cas contraire retour à la première étape,

la classification de la vitesse du véhicule en régions (pas $S_114$),

l'addition de la valeur de jugement (D) à la région correspondante de vitesse (pas $S_115$),

lorsque chaque région d'un premier nombre de régions de vitesse contient au moins un second nombre de données (pas $S_117$), l'obtention d'une moyenne des valeurs de jugement (D) ajoutées dans les régions de vitesse et de la valeur moyenne de chaque région de vitesse (pas $S_118$), avec retour dans le cas contraire à la première étape (pas $S_11$),

le jugement du fait que la différence entre la valeur maximale et la valeur minimale de la moyenne (D) est inférieure à la valeur prédéterminée de seuil (pas $S_119$),

l'adoption d'une fonction du second ordre ($y = ax^2 + b$) de la valeur de jugement comme variable dépendante (y) et de la vitesse comme variable indépendante (x) à partir des valeurs de la moyenne des valeurs de jugement (D) et de la valeur moyenne de chaque région de vitesse par la méthode des moindres carrés (pas $S_121$),

l'obtention, à partir de la fonction du second ordre, d'une valeur de fonction de jugement à faible vitesse (crosp) (pas $S_121$),

le jugement du fait que la pression pneumatique du pneumatique est réduite ou non d'après la valeur de fonction de jugement à faible vitesse (crosp) (pas $S_122$), et

l'émission d'une alarme lorsqu'il est déterminé que la pression pneumatique est abaissée (pas $S_19$, $S_111$, $S_123$).

F I G. 1

F I G. 2

Control Unit

I/O Interface

C P U

ROM

RAM

2
2a
2b
2c
2d

Display

w1    w2
w3    w4

3

Initialization Switch

4

# F I G. 3

S 1 — Calculation of angular velocity of rotation Ei for one second

S 2 — Initial correction to Fi to calculate Fli

S 3 — Calculation of vehicle velocity v, turning radius R, lateral G, and forward and backward acceleration A

S 4 — Reject or not?

Y

N

S 5 — Calculation of judgement value D

S 6 — Calculation of corrected D(D′)

S 7 — D′ ≧ Alarm

Y

N

S 8 — Deletion of alarm (in case of same plural judgements)

S 9 — Generation of alarm (in case of same plural judgements)

S 10 — Velocity regression air pressure decrease judgement

# F I G. 4

S 1 0 — Velocity regression air pressure decrease judgement

S 1 1 — In high velocity and driven condition?

Y

S 1 2 — Division of inputted velocity by 10km/h

S 1 3 — Addition of judgement value D′ in corresponding velocity region

S 1 4 — Addition of velocity in corresponding velocity region

S 1 5 — Counting up in corresponding velocity region

S 1 6 — Initialization of counter (Add2) for counting number of region containing not less than 6 data

S 1 7 — Velocity region containing not less than 6 data or not? — N

Y

S 1 8 — Obtain D′ and average velocity of velocity region

S 1 9 — Add 2 = Add 2 + 1

S 2 0 — Completion of all velocity regions?

A

EP 0 802 074 B1

# F I G.  5

A

S 2 1    Add2 = 4    N

Y

S 2 2    Obtain D' (Crosp) at velocity of zero based on D' and average velocity using the least squares method

S 2 3    |CrosP| ≧ Alarm

Generation of alarm

S 2 4

S 2 5    |CrosP| < Alarm

Deletion of alarm

S 2 6

R E T

18

# F I G.  6

# F I G.  7

# F I G.  8

**Start**

$S_1 1$ — Calculation of angular velocity of rotation Ei for one second

$S_1 2$ — Initial correction to Fi to calculate F1i

$S_1 3$ — Calculation of vehicle velocity V, turning radius R, lateral G, and forward and backward acceleration A

$S_1 4$ — Reject or not?  Y / N

$S_1 5$ — Calculation of judgement value D

$S_1 6$ — Calculation of corrected D(D')

$S_1 7$ — Various judgements of air pressure decrease

$S_1 8$ — Velocity regression air pressure decrease judgement

$S_1 9$ — Setting of alarm flag?  Y / N

$S_1 10$ — Deletion of alarm

$S_1 11$ — Generation of alarm

# F I G. 9

$S_1 1 2$

Velocity regression air
pressure decrease judgement

$S_1 1 3$

In high velocity and
driven condition? — N → B

Y

$S_1 1 4$

Division of inputted velocity

$S_1 1 5$

Addition of judgement value D' in
corresponding velocity region

$S_1 1 6$

Counting up in corresponding
velocity region

$S_1 1 7$

Are there 4 velocity regions containing
not less than 15 data? — N → B

Y

$S_1 1 8$

Obtain average D' and mean value
in each velocity region

$S_1 1 9$

Is difference between maximum of
average D' and minimum thereof
less than 0.04? — N

Y

$S_1 2 0$

Set average D' to zero in all
regions

A

22

# F I G. 1 0

$S_121$ — Obtain judgement value (CrosP) based on average D' and velocity using the least squares method

$S_122$ — |CrosP| ≧ threshold value for alarm judgement

N

Y

$S_123$ — Setting of alarm flag

$S_124$ — Clearing of alarm flag

$S_125$ — Initialization of variables

A

B

R E T

F I G. 11

EP 0 802 074 B1

# F I G. 1 2

$y = ax^2 + b$

D′

Velocity (km／h)

EP 0 802 074 B1